# EUROPÄISCHE PATENTSCHRIFT

(11) **EP 2 531 765 B1**
(45) Veröffentlichungstag und Bekanntmachung des Hinweises auf die Patenterteilung: **02.04.2014**
(21) Anmeldenummer: 10787443.0
(22) Anmeldetag: 06.12.2010
(51) Int. Cl.: F16L 37/113

(54) **KUPPLUNGSEINRICHTUNG UND FRISCHLUFTANLAGE**
COUPLING DEVICE AND FRESH AIR SYSTEM
DISPOSITIF D'ACCOUPLEMENT ET INSTALLATION D'AIR FRAIS

(30) Priorität: 11.12.2009 DE 102009057867
(43) Veröffentlichungstag der Anmeldung: 12.12.2012
(73) Patentinhaber: Mahle International GmbH, 70376 Stuttgart (DE)
(72) Erfinder: SCHIESZL, Andreas, 73479 Ellwangen (DE)
(74) Vertreter: BRP Renaud & Partner
(86) Internationale Anmeldenummer: PCT/EP2010/068919
(87) Internationale Veröffentlichungsnummer: WO 2011/069938

(56) Entgegenhaltungen:
- DE-A1- 19 837 767
- DE-U1-202006 004 407
- FR-A1- 2 854 675

## Beschreibung

Die vorliegende Erfindung betrifft eine Kupplungseinrichtung für eine Frischluftanlage für eine Brennkraftmaschine, insbesondere eines Kraftfahrzeugs, zum kommunizierenden Verbinden von zwei Komponenten der Frischluftanlage miteinander, mit den Merkmalen des Oberbegriffs des Anspruchs 1. Die Erfindung betrifft außerdem eine mit einer solchen Kupplungseinrichtung ausgestattete Frischluftanlage.

Beim Zusammenbauen einer Frischluftanlage müssen verschiedene Komponenten der Frischluftanlage kommunizierend miteinander verbunden werden. Beispielsweise muss ein Luftfiltergehäuse mit einem Frischluftverteilergehäuse verbunden werden. Ebenso kann es erforderlich sein, Schläuche oder Rohre miteinander oder mit einem Gehäuse zu verbinden. Hierbei können Kupplungseinrichtungen zum Einsatz kommen.

Aus der DE 198 37 767 A ist eine Kupplungseinrichtung zum kommunizierenden Verbinden von zwei fluidführenden Komponenten von Elektromagnetventilen bekannt. Die Kupplungseinrichtung umfasst einen ersten zylindrischen Anschlusskörper, der mehrere, in Umfangsrichtung beabstandet angeordnete, radial nach außen vorstehende Rastelemente aufweist, und einen zweiten zylindrischen Anschlusskörper, an dem ein Sicherungsring zwischen einer Verriegelungsstellung und einer Entriegelungsstellung verdrehbar gelagert ist. Dabei weist der Sicherungsring Rastkonturen auf, die komplementär zu den Rastelementen angeordnet sind und die in der Verriegelungsstellung des Sicherungsrings mit den Rastelementen formschlüssig in Eingriff stehen. Der Sicherungsring weist außerdem in der Umfangsrichtung zwischen den Rastkonturen Durchgänge auf, die komplementär zu den Rastelementen angeordnet sind und durch welche die Rastelemente in der Entriegelungsstellung des Sicherungsrings axial durchführbar sind. Ferner ist eine Rasteinrichtung zur Drehsicherung des Sicherungsrings in der Verriegelungsstellung vorgesehen, die zumindest eine am Sicherungsring ausgebildete Raste und zumindest eine am ersten Anschlusskörper oder am zweiten Anschlusskörper ausgebildete Gegenraste aufweist, mit welcher die Raste bei Erreichen der Verriegelungsstellung verrastet und eine formschlüssige Drehsicherung bildet.

Die vorliegende Erfindung beschäftigt sich mit dem Problem, für eine Kupplungseinrichtung der eingangs genannten Art bzw. für eine Frischluftanlage eine verbesserte Ausführungsform anzugeben, die sich insbesondere dadurch auszeichnet, dass sie sich für eine Serienfertigung eignet, beispielsweise indem sie das Herstellen der kommunizierenden Verbindung besonders einfach ermöglicht. Des Weiteren soll die hergestellte Verbindung zum Beispiel für Wartungszwecke wieder einfach gelöst werden können.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Kupplungseinrichtung mit zwei Fluid führenden Anschlusskörpern auszustatten, wobei der eine Anschlusskörper Rastelemente aufweist, während der andere Anschlusskörper mit einem daran drehbar angeordneten Sicherungsring ausgestattet ist, der zu den Rastelementen komplementäre Rastkonturen besitzt. In einer Verriegelungsstellung des Sicherungsrings hintergreifen die Rastelemente formschlüssig die Rastkonturen. In einer Entriegelungsstellung des Sicherungsrings sind die Rastelemente axial durch Durchgänge durchführbar, die der Sicherungsring in Umfangsrichtung zwischen den Rastkonturen aufweist. Durch die vorgeschlagene Bauweise lassen sich die beiden Anschlusskörper durch reine Axialbewegungen montieren und demontieren. Die Verriegelung bzw. die Entriegelung erfolgt dann durch ein Verdrehen des Sicherungsrings. Das Herstellen und das Lösen der kommunizierenden Verbindung der beiden Komponenten der Frischluftanlage lässt sich somit insbesondere ohne Drehbewegung zwischen den beiden Komponenten durchführen, was insbesondere dann von Vorteil ist, wenn vergleichsweise wenig Bauraum zum Drehen der Komponenten zur Verfügung steht. Dies ist bei Fahrzeugen, insbesondere in deren Motorraum regelmäßig der Fall. Somit vereinfacht die vorgeschlagene Kupplungseinrichtung, wenn sie bei einer Frischluftanlage zum Einsatz kommt, die Serienfertigung der Frischluftanlage bzw. den serienmäßigen Einbau der Frischluftanlage in ein Kraftfahrzeug. Ferner kann der Sicherungsring insbesondere "blind" betätigt werden, also auch an verdeckten und schwer zugänglichen bzw. schwer einsehbaren Positionen. Auch dies vereinfacht die Montage bzw. Demontage.

Die erfindungsgemäße Kupplungseinrichtung ist außerdem mit einer Rasteinrichtung zur Drehsicherung des Sicherungsrings in der Verriegelungsstellung ausgestattet. Durch diese Maßnahme kann ein unbeabsichtigtes Verdrehen des Sicherungsrings aus der Verriegelungsstellung in die Endriegelungsstellung hinein vermieden werden. Somit kann die fluidische Verbindung zwischen den jeweiligen Komponenten, die mit Hilfe der Kupplungseinrichtung erzeugt wird, effektiv gesichert werden.

Erfindungsgemäß weist die Rasteinrichtung zumindest eine am Sicherungsring ausgebildete Raste und zumindest eine am ersten Anschlusskörper oder am zweiten Anschlusskörper ausgebildete Gegenraste auf, mit welcher die Raste beim Erreichen der Verriegelungsstellung verrastet und eine formschlüssige Drehsicherung bildet. Die Rasteinrichtung wird durch diesen Vorschlag baulich in den Sicherungsring und einen der Anschlusskörper integriert. Somit lässt sich die Rasteinrichtung vergleichsweise preiswert und mit vergleichsweise wenig Bauraumbedarf realisieren. Insbesondere ist es dabei möglich, die jeweilige Raste integral am Sicherungsring auszuformen. Zusätzlich oder alternativ kann die jeweilige Gegenraste integral am jeweiligen Anschlusskörper ausgeformt sein. Diese Integralbauweise vermeidet zusätzliche Bauteile, was den Aufwand zur Herstellung der Kupplungseinrichtung reduziert.

Bei der Erfindung weist die Raste einen am Sicherungsring radial federelastisch angeordneten Rastarm auf, wobei die Gegenraste eine Rastöffnung umfasst, die in einem den Sicherungsring einfassenden Kragen ausgebildet ist. Bei Erreichen der Verriegelungsstellung greift der Rastarm in diese Rastöffnung radial ein und stützt sich zur Drehsicherung in Umfangsrichtung an einem Rand der Rastöffnung ab. Hierdurch wird eine besonders stabile Verrastung realisiert. Gleichzeitig ermöglicht der radial federelastische Rastarm ein einfaches Lösen der Verrastung, wenn der Sicherungsring gezielt in die Entriegelungsstellung überführt werden soll.

Grundsätzlich ist es möglich, die Raste und/oder die Gegenraste so auszugestalten, dass sie zum Lösen der Verrastung quer zur Drehrichtung federelastisch beweglich ausgestaltet ist.

Entsprechend einer vorteilhaften Ausführungsform können die Anschlusskörper in der Verriegelungsstellung des Sicherungsrings ausschließlich durch Kraftschluss, insbesondere durch Reibschluss, relativ zueinander gegen Verdrehen gesichert sein. Durch diese Bauweise kann auf zusätzliche Maßnahmen, die beispielsweise eine formschlüssige Verdrehsicherung realisieren, verzichtet werden. Insbesondere baut die Kupplungseinrichtung dadurch in ihrer Steckrichtung vergleichsweise kurz, also kompakt. Besonders zweckmäßig ist dabei eine Ausführungsform, bei welcher die gegen Verdrehen sichernde Kraft durch ein Verpressen einer Dichtung erzeugt wird, die in der Verriegelungsstellung die beiden Anschlusskörper gegeneinander dichtet. Hierdurch erhält die Dichtung eine Doppelfunktion. Des Weiteren kann bei vorhandener Dichtung auf zusätzliche Maßnahmen zum Erzeugen der gegen Verdrehen sichernden Kraft verzichtet werden.

Bei einer alternativen Ausführungsform kann auch eine Verdrehsicherung mittels Formschluss vorgesehen sein, z.B. in Form einer zwischen den Anschlusskörpern wirksamen Axialführung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Kupplungseinrichtung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen Längsschnitt durch eine Frischluftanlage im Bereich einer Kupplungseinrichtung,
- Fig. 2: die Kupplungseinrichtung in einem verriegelten Zustand in einer perspektivischen Ansicht (A), in einer Seitenansicht (B) und in einer axialen Ansicht (C),
- Fig. 3: Ansichten wie in Fig. 2, jedoch in einem entriegelten Zustand,
- Fig. 4: eine perspektivische Ansicht der Kupplungseinrichtung in einer auseinandergezogenen Darstellung,
- Fig. 5: ein Sicherungsring der Kupplungseinrichtung in einer perspektivischen Ansicht (A), in einer Seitenansicht (B) und in einer axialen Ansicht (C),
- Fig. 6: Ansichten wie in Fig. 5, jedoch eines Anschlusskörpers der Kupplungseinrichtung,
- Fig. 7: Ansichten wie in Fig. 6, jedoch eines anderen Anschlusskörpers,
- Fig. 8: eine perspektivische Ansicht auf die Kupplungseinrichtung im Bereich einer Rasteinrichtung, jedoch bei einer von den Ansprüchen nicht erfassten Ausführungsform,
- Fig. 9: eine radiale Ansicht auf den Bereich der Rasteinrichtung aus Fig. 8,
- Fig. 10: eine axiale Ansicht auf den Bereich der Rasteinrichtung aus Fig. 8,
- Fig. 11: eine perspektivische Ansicht der Kupplungseinrichtung mit einer anderen Rasteinrichtung bei einer erfindungsgemäßen Ausführungsform,
- Fig. 12: eine radiale Ansicht auf den Bereich der anderen Rasteinrichtung aus Fig. 11,
- Fig. 13: eine Schnittansicht entsprechend Schnittlinie XIII in Fig. 12 im Bereich der Rasteinrichtung.

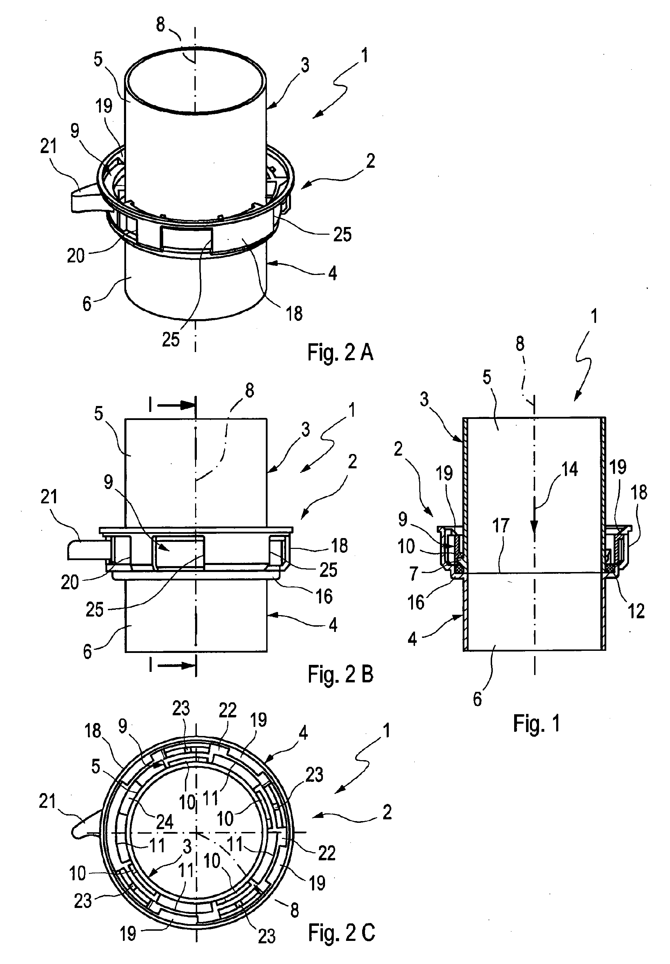

Entsprechend Fig. 1 umfasst eine Frischluftanlage 1 eine Kupplungseinrichtung 2, um zwei Komponenten 3, 4 der Frischluftanlage 1 kommunizierend miteinander verbinden zu können. Die Frischluftanlage 1 dient zur Versorgung einer Brennkraftmaschine mit Frischluft, wobei die Brennkraftmaschine insbesondere in einem Kraftfahrzeug angeordnet ist. Bei den beiden Komponenten 3, 4, die mit Hilfe der Kupplungseinrichtung 2 kommunizierend miteinander verbunden werden können, kann es sich um Leitungsabschnitte, Rohre, Schläuche sowie Gehäuse handeln, wie zum Beispiel ein Luftfiltergehäuse, ein Frischluftverteilergehäuse, ein Kompressorgehäuse, ein Verdichtergehäuse und ein Saugmodulgehäuse. Beispielsweise können mit der Kupplungseinrichtung 2 zwei Gehäuse miteinander verbunden werden oder zwei Leitungen bzw. Rohre bzw. Schläuche. Ebenso eignet sich die Kupplungseinrichtung 2 zum Verbinden eines Gehäuses mit einer Leitung, einem Rohr oder einem Schlauch. Darüber hinaus kann die hier in Verbindung mit der Frischluftanlage 1 vorgestellte Kupplungseinrichtung 2 auch völlig unabhängig von der Frischluftanlage 1 verwendet werden, um beliebige, von einer Frischluftanlage 1 unabhängige Komponenten, insbesondere ein Fluid führende Gehäuse, Leitungen, Rohre, Schläuche miteinander kommunizierend zu verbinden. Beispielsweise kann mit Hilfe der Kupplungseinrichtung ein Kühlmittelschlauch an einen Fahrzeugkühler angeschlossen werden.

Die Kupplungseinrichtung 2 weist zwei zylindrische Anschlusskörper auf, nämlich einen ersten Anschlusskörper 5 und einen zweiten Anschlusskörper 6. Der jeweilige Anschlusskörper 5, 6 kann dabei integral an der zugehörigen Komponente 3 bzw. 4 ausgeformt sein. Ebenso kann derjeweilige Anschlusskörper 5, 6 an der zugehörigen Komponente 3, 4 auf geeignete Weise angebaut sein. Beispielsweise kann der jeweilige Anschlusskörper 5, 6 an der zugehörigen Komponente 3, 4 einen Anschlussstutzen oder einen Endabschnitt bilden.

Der erste Anschlusskörper 5 weist an seiner Außenseite mehrere Rastelemente 7 auf, die in Umfangsrichtung voneinander beabstandet angeordnet sind und die radial nach außen vorstehen. Die Begriffe "Umfangsrichtung" und "radial" sowie weiter unten "axial" beziehen sich auf eine Längsmittelachse 8 der zylindrischen, insbesondere kreiszylindrischen, Anschlusskörper 5, 6. Der zweite Anschlusskörper 6 weist einen koaxial zur Längsmittelachse 8 angeordneten Sicherungsring 9 auf, der am zweiten Anschlusskörper 6 um die Längsmittelachse 8 verdrehbar gelagert ist. Dabei ist der Sicherungsring 9 zwischen einer Verriegelungsstellung und einer Entriegelungsstellung verdrehbar. Der Drehwinkel zwischen der Verriegelungsstellung und der Entriegelungsstellung, die jeweils Endlagen bilden können, ist relativ klein und liegt beispielsweise bei etwa 30° ± 10°. Der Sicherungsring 9 weist Rastkonturen 10 auf, die komplementär zu den Rastelementen 7 angeordnet sind, und zwar so, dass sie im montierten Zustand von den Rastelementen 7 hintergreifbar sind. Fig. 1 zeigt dabei einen verriegelten Zustand der Kupplungseinrichtung 2, bei dem der Sicherungsring 9 in seine Verriegelungsstellung verdreht ist. Dementsprechend hintergreifen die Rastelemente 7 die Rastkonturen 10 in der Verriegelungsstellung formschlüssig.

Entsprechend den Fig. 1 bis 7 weist der Sicherungsring 9 außerdem Durchgänge 11 auf, die sich in Umfangsrichtung jeweils zwischen zwei benachbarten Rastkonturen 10 befinden und die ebenfalls komplementär zu den Rastelementen 7 angeordnet sind. Sofern der Sicherungsring 9 in seine Entriegelungsstellung verstellt ist, sind die Rastelemente 7 durch die Durchgänge 11 axial durchführbar. Das bedeutet, dass die beiden Anschlusskörper 5, 6 axial auseinander gezogen werden können, wenn der Sicherungsring 9 in seine Entriegelungsstellung verstellt ist. Zum Trennen oder Lösen der kommunizierenden Verbindung der Kupplungseinrichtung 2 ist somit keine Drehbewegung zwischen den Anschlusskörpern 5, 6 erforderlich. Das Trennen oder Lösen der Verbindung lässt sich durch eine reine Axialbewegung durchführen.

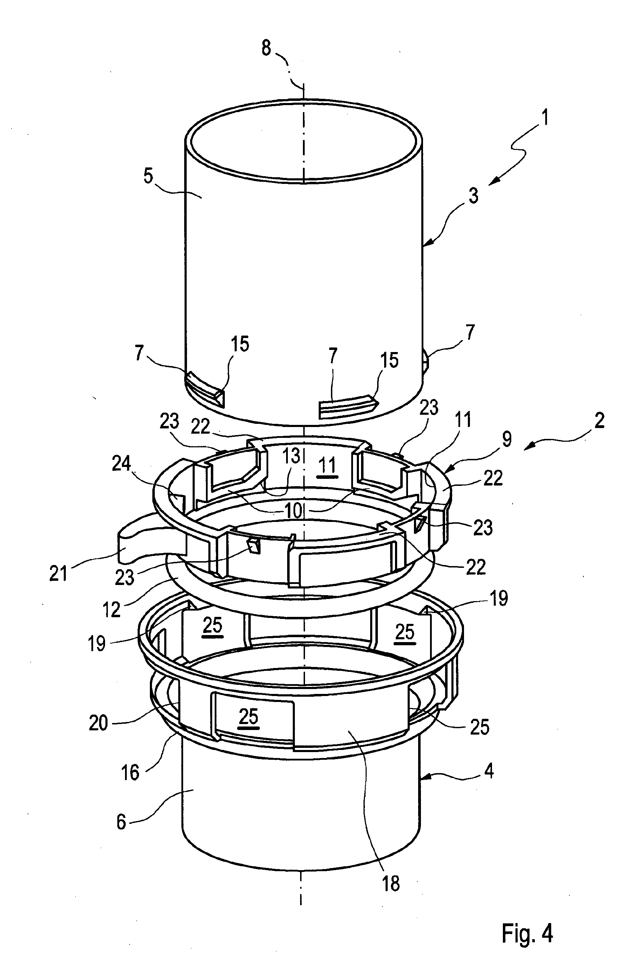

Entsprechend den Fig. 1 und 4 kann die Kupplungseinrichtung 2 außerdem eine Dichtung 12 aufweisen, zweckmäßig in Form eines O-Rings. Die Dichtung 12 ist dabei so angeordnet, dass sie den ersten Anschlusskörper 5 gegenüber dem zweiten Anschlusskörper 6 dichtet. Im Beispiel ist die Dichtung 12 so angeordnet, dass sie hauptsächlich radial dichtend wirkt. Hierzu ist sie radial zwischen den Anschlusskörpern 5, 6 verpresst, also elastisch komprimiert. Da sie im gezeigten Beispiel außerdem axial an einem der Anschlusskörper 5, 6 anliegt, besitzt sie außerdem eine gewisse axiale Dichtwirkung. Alternativ kann auch eine rein axial wirkende Dichtung 12 vorgesehen sein. Eine axial wirkende Dichtung 12 ist axial zwischen den Anschlusskörpern 5, 6 verpresst.

Im verriegelten Zustand der Kupplungseinrichtung 2 können die Anschlusskörper 5, 6 gegen ein Verdrehen relativ zueinander gesichert sein. Besonders vorteilhaft ist dabei eine Ausführungsform, bei welcher diese Verdrehsicherung ausschließlich durch Kraftschluss, und zwar insbesondere durch Reibschluss, realisiert wird. Hierzu kann in besonderer Weise die Dichtung 12 beitragen, indem diese entsprechend verpresst wird. Die Dichtung 12 besitzt einen relativ hohen Haftreibungswiderstand gegenüber den Anschlusskörpern 5, 6, wodurch diese bei einer entsprechenden Belastung der Dichtung 12 entsprechend gegen Verdrehen gesichert sind. Zusätzlich oder alternativ dazu kann auch eine mit Formschluss arbeitende Verdrehsicherung vorgesehen sein. Beispielsweise kann eine solche, hier nicht gezeigte separate Verdrehsicherung durch eine Längs- oder Axialführung realisiert werden, die zum Einen das Auffinden einer ordnungsgemäßen Steckposition erleichtert, in welcher die Anschlusskörper 5, 6 ineinander steckbar sind. Zum Anderen erleichtert die axiale Führung den Steckvorgang selbst. Eine solche, mit Formschluss arbeitende Axialführung, die gleichzeitig eine Verdrehsicherung bildet, kann beispielsweise durch wenigstens eine Nut-Feder-Verbindung realisiert werden, die an dem einen Anschlusskörper 5, 6 eine axiale Nut und am anderen Anschlusskörper 5, 6 einen radial abstehenden, sich axial erstreckenden Steg als Feder aufweist.

Der Sicherungsring 9 ist bei der hier gezeigten Ausführungsform vergleichsweise formstabil ausgestaltet, und zwar derart, dass der erste Anschlusskörper 5 nur dann axial in den zweiten Anschlusskörper 6 einsteckbar ist, wenn sich der Sicherungsring 9 in seiner Entriegelungsstellung befindet und wenn die Rastelemente 7 auf die Durchgänge 11 ausgerichtet sind. Das bedeutet, dass die kommunizierende Verbindung zwischen den beiden Anschlusskörpern 5, 6 nur dann hergestellt werden kann, wenn der Sicherungsring 9 seine Entriegelungsstellung einnimmt. Bei einer anderen, hier nicht gezeigten Ausführungsform kann der Sicherungsring 9 auch soweit formelastisch ausgestaltet werden, dass der erste Anschlusskörper 5 mit auf die Rastkonturen 10 ausgerichteten Rastelementen 7 axial in den zweiten Anschlusskörper 6 einsteckbar ist und mit den Rastelementen 7 an den Rastkonturen 10 verrastbar ist, wenn sich der Sicherungsring 9 in seiner Verriegelungsstellung befindet. Mit anderen Worten, die kommunizierende Verbindung zwischen den Anschlusskörpern 5, 6 lässt sich auch dann herstellen, wenn sich der Sicherungsring 9 in seiner Verriegelungsstellung befindet. Dabei verdrängen die Rastelemente 7 beim Einstecken die Rastkonturen 10 radial nach außen, was durch die Elastizität des Sicherungsrings 9 ermöglicht wird. Sobald die Rastelemente 7 an den Rastkonturen 10 vorbeigeführt sind, federn diese radial nach innen zurück, wodurch es zur Verrastung kommt, die nur noch durch Verdrehen des Sicherungsrings 9 in dessen Entriegelungsstellung gelöst werden kann. Diese Bauweise führt zu einer weiteren Vereinfachung der Montage, da hierzu der Sicherungsring 9 selbst nicht mehr zugänglich sein muss.

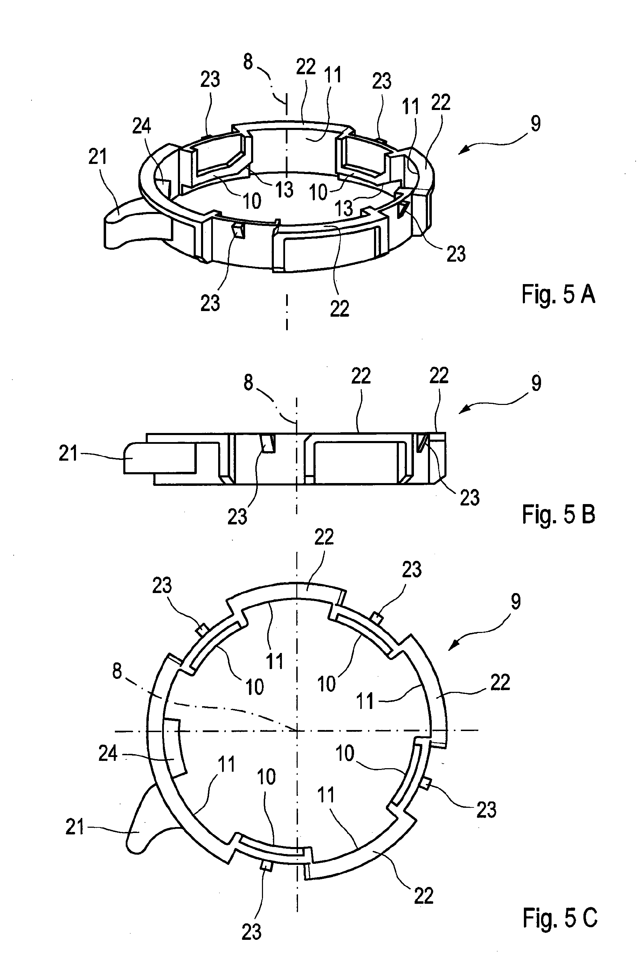

Entsprechend den Fig. 4 und 5 besitzt der Sicherungsring 9 an den Rastkonturen 10 zweckmäßig in der Umfangsrichtung orientierte Einführschrägen 13. Diese Einführschrägen 13 erleichtern bei eingestecktem ersten Anschlusskörper 5 das Überfahren der Rastelemente 7 und Bewirken beim Verdrehen des Sicherungsrings 9 in die Verriegelungsstellung einen axialen Vorschub der Rastelemente 7 in der Einsteckrichtung, die zum Beispiel in Fig. 1 durch einen mit 14 bezeichneten Pfeil angedeutet ist. Bei der Einsteckrichtung 14 handelt es sich um eine relative Richtung, die sich auf den ersten Anschlusskörper 5 mit Bezug auf den zweiten Anschlusskörper 6 bezieht. Es ist klar, dass grundsätzlich auch der zweite Anschlusskörper 6 auf den ersten Anschlusskörper 5 aufgesteckt werden kann. Eine entsprechende Aufsteckrichtung ist dann der Einsteckrichtung 14 entgegengesetzt orientiert.

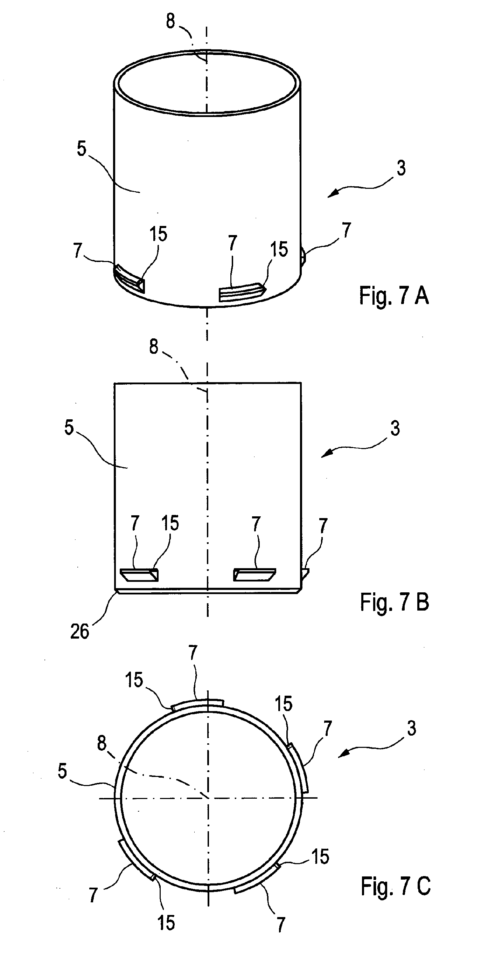

Entsprechend den Fig. 4 und 7 können die Rastelemente 7 optional in der Umfangsrichtung orientierte Einführschrägen 15 aufweisen. Diese Einführschrägen 15 erleichtern ebenfalls beim Verdrehen des Sicherungsrings 9 das Überfahren der Rastelemente 7 durch die Rastkonturen 10. Sie unterstützen dabei das axiale Antreiben der Rastelemente 7 in der Einsteckrichtung 14. Insbesondere wirken die Einführschrägen 15 der Rastelemente 7 beim Verdrehen des Sicherungsrings 9 in die Verriegelungsstellung mit den Einführschrägen 13 der Rastkonturen 10 zusammen. Hierzu können die Einführschrägen 13 der Rastkonturen 10 und die Einführschrägen 15 der Rastelemente 7 bevorzugt mit gleichen Rampenwinkeln ausgestattet sein.

Abgesehen von den Einführschrägen 13 bzw. 15 erstrecken sich die Rastelemente 7 und die Rastkonturen 10 jeweils in der Umfangsrichtung, und zwar in einer gemeinsamen Ebene, die senkrecht zur Längsmittelachse 8 verläuft. Die Rastelemente 7 und die Rastkonturen 10 besitzen somit abgesehen von den Einführschrägen 13, 15 keine Steigung. Hierdurch können bei Zugbelastung der Anschlusskörper 5, 6 keine Momente auf den Sicherungsring 9 übertragen werden, wodurch die Gefahr reduziert ist, dass sich der Sicherungsring 9 unter Zugbelastung der Anschlusskörper 5, 6 selbsttätig in seine Entriegelungsstellung verdreht.

Entsprechend den Fig. 1-7 kann der zweite Anschlusskörper 6 eine Ringstufe 16 aufweisen, die sich in einer Ebene erstreckt, die quer zur Längsmittelachse 8 verläuft. An dieser Ringstufe 16 kommt der erste Anschlusskörper 5 im eingesteckten Zustand und bei in die Verriegelungsstellung verstelltem Sicherungsring 9 axial stirnseitig zur Anlage. Von besonderem Vorteil ist dabei die hier gezeigte Ausführungsform, bei welcher die beiden Anschlusskörper 5, 6 über einen Stoß 17 axial aneinander stoßen, wobei sie am Stoß 17 gleiche Durchströmungsquerschnitte besitzen. Der Übergang erfolgt somit ungestuft. Im Beispiel besitzen beide Anschlusskörper 5, 6 jeweils einen in axialer Richtung konstanten Durchströmungsquerschnitt. Hierdurch besitzt die Kupplungseinrichtung 2 einen extrem niedrigen Durchströmungswiderstand. Der erste Anschlusskörper 5 stößt mit seiner axialen Stirnseite an den Stoß 17, während der zweite Anschlusskörper 6 mit der Ringstufe 16 an den Stoß 17 anstößt.

Der zweite Anschlusskörper 6 weist hier außerdem einen Kragen 18 auf, der die Ringstufe 16 in der Umfangsrichtung umschließt und der in der Axialrichtung in Richtung zum ersten Anschlusskörper 5 vom zweiten Anschlusskörper 6 bzw. von der Ringstufe 16 absteht. In diesem Kragen 18 ist der Sicherungsring 9 drehbar angeordnet. Der Kragen 18 bildet eine Einfassung für den Sicherungsring 9. Am Kragen 18 können Halteelemente 19 ausgebildet sein, die radial nach innen vorstehen und die den Sicherungsring 9 formschlüssig übergreifen, zumindest dann, wenn sich der Sicherungsring 9 in seiner Verriegelungsstellung befindet. Hierdurch ist der Sicherungsring 9 zumindest in der Verriegelungsstellung am zweiten Anschlusskörper 6 gegen ein axiales Herausziehen formschlüssig gesichert. Besagter Kragen 18 kann nun zumindest einen radialen Durchbruch 20 aufweisen, durch den ein Betätigungselement 21 des Sicherungsrings 9 radial hindurchragt. Der Durchbruch 20 ist dabei so dimensioniert, dass er ein Verstellen des Betätigungselements 21 innerhalb des Durchbruchs 20 ermöglicht, derart, dass der Sicherungsring 9 zwischen der Entriegelungsstellung und der Verriegelungsstellung verdrehbar ist. Insbesondere kann der Durchbruch 20 in Verbindung mit dem Betätigungselement 21 Endanschläge für die Verdrehbewegung des Sicherungsrings 9 definieren. Über das Betätigungselement 21 können Kräfte zum Drehverstellen des Sicherungsrings 9 eingeleitet werden.

Der Sicherungsring 9 ist bevorzugt ein bezüglich der beiden Anschlusskörper 5, 6 separat hergestelltes Bauteil, das in den Kragen 18 einsetzbar ist. Dabei ist der Sicherungsring 9, wenn er in den zweiten Anschlusskörper 6 bzw. in den Kragen 18 eingesetzt ist, am zweiten Anschlusskörper 6 verliersicher angeordnet. Diese Verliersicherung wird für die Verriegelungsstellung durch die zuvor genannten Halteelemente 19 realisiert, welche den Sicherungsring 9 radial übergreifen. Für diesen radialen Übergriff weist der Sicherungsring 9 jeweils im Bereich der Durchgänge 11 radial nach außen vorstehende Kragensegmente 22 auf. Im Bereich der Rastkonturen 10 weist der Sicherungsring 9, insbesondere mittig, jeweils eine Nase 23 auf, die in radialer Richtung nur einen vergleichsweise kleinen Übergriff der Halteelemente 19 ermöglichen, wenn der Sicherungsring 9 in seine Entriegelungsstellung verdreht ist. Dieser im Vergleich zu den Kragensegmenten 22 kleine Übergriff sorgt für die erforderliche Verliersicherung in der Entriegelungsstellung des Sicherungsrings 9. Gleichzeitig ermöglicht der kleine Übergriff die Montage und Demontage des Sicherungsrings 9, da sich der Übergriff durch elastische Verformung des Kragens 18 einfach überwinden lässt. Die Nasen 23 können bezüglich der Kragensegmente 22 axial in Richtung zur Ringstufe 16 versetzt angeordnet sein. Hierdurch kann einerseits eine ausreichende Verliersicherung gewährleistet werden, während andererseits die Montage und Demontage durch das bereitgestellte Axialspiel erleichtert wird.

Der Sicherungsring 9 besitzt entsprechend den Fig. 2C und 5 optional ein Stegsegment 24, das radial nach innen vorsteht, und zwar etwa soweit wie die Rastkonturen 10. Dieses Stegsegment 24 befindet sich dabei in einem Umfangsabschnitt, der zwischen zwei Rastkonturen 10 liegt und in dem das Betätigungselement 21 angeordnet ist. Bei diesem Umfangsabschnitt besitzen die daran angrenzenden Rastkonturen 10 einen Umfangsabstand, der größer ist, als die Umfangsabstände zwischen den anderen Rastkonturen 10. Das Stegsegment 24 vereinfacht die Drehbarkeit des Sicherungsrings 9 und verhindert insbesondere ein Verkanten des Sicherungsrings 9 am ersten Anschlusskörper 5.

Zweckmäßig sind die Rastelemente 7 und die Rastkonturen 10 in der Umfangsrichtung asymmetrisch angeordnet, wodurch die Anschlusskörper 5, 6 nur in einer vorbestimmten relativen Drehlage ineinander gesteckt werden können, was die Montagesicherheit erhöht.

Der Kragen 18 besitzt bei der hier gezeigten Ausführungsform weitere Durchbrüche 25, die jeweils zwischen benachbarten Rastkonturen 10 angeordnet sind. Diese zusätzlichen Durchbrüche 25 erhöhen insbesondere die Formelastizität des Kragens 18, was die Montage und gegebenenfalls die Demontage des Sicherungsrings 9 vereinfacht.

Gemäß den Fig. 7A und 7B weist der zweite Anschlusskörper 5 an seiner beim Einstecken vorausgehenden axialen Stirnseite eine radial außen liegende Fase 26 auf, die das Eindringen in die Dichtung 12 erleichtert.

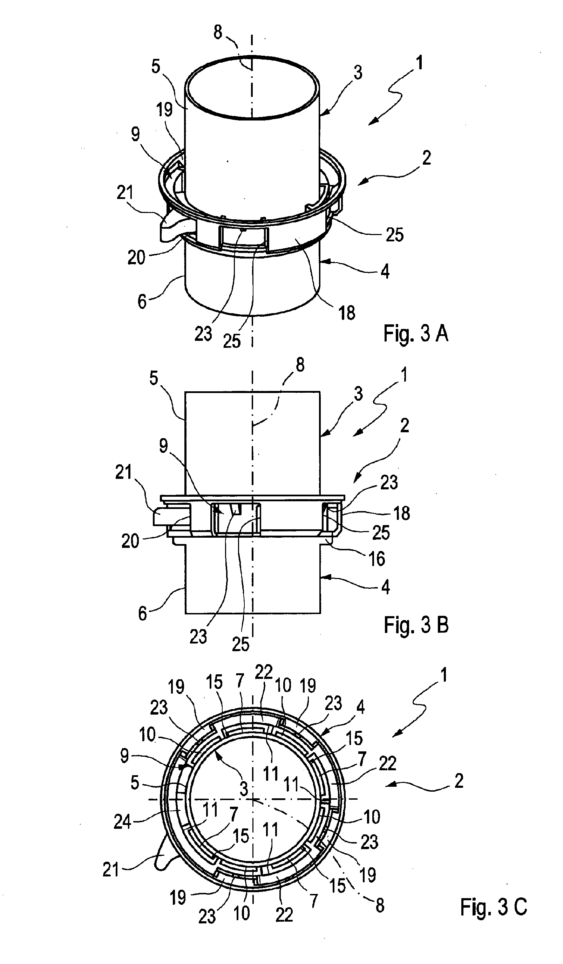

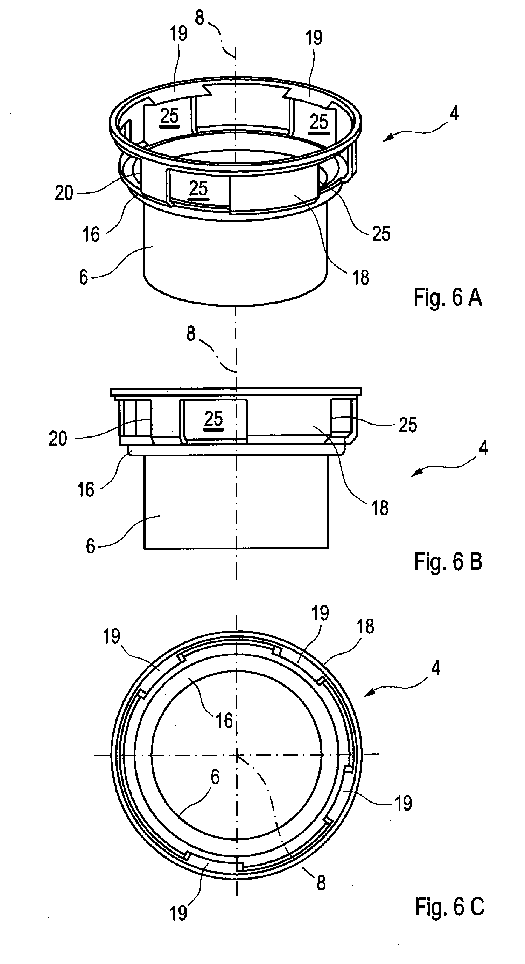

Fig. 1 zeigt den eingesteckten und verriegelten Zustand der Kupplungseinrichtung 2. Fig. 2 zeigt ebenfalls den eingesteckten und verriegelten Zustand der Kupplungseinrichtung 2. Fig. 3 zeigt den eingesteckten, jedoch entriegelten Zustand der Kupplungseinrichtung 2. Fig. 4 zeigt den demontierten Zustand der Kupplungseinrichtung 2. Fig. 5 zeigt den Sicherungsring alleine. Fig. 6 zeigt den zweiten Anschlusskörper 6 alleine. Fig. 7 zeigt den ersten Anschlusskörper 5 alleine.

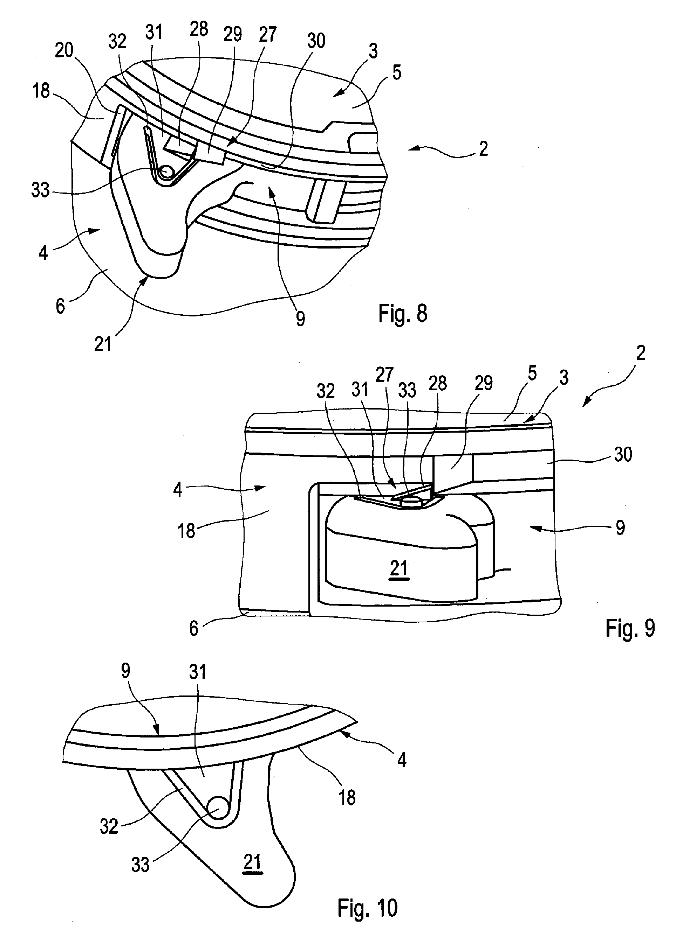

Entsprechen den Fig. 8 bis 13 ist die Küpplungseinrichtung 2 außerdem mit einer Rasteinrichtung 27 ausgestattet. Die Rasteinrichtung 27 erzeugt eine Drehsicherung des Sicherungsrings 9, wenn sich dieser in seiner Verriegelungsstellung befindet. Die Rasteinrichtung 27 verhindert dadurch ein Verdrehen des Sicherungsrings 9 aus seiner Verriegelungsstellung heraus in seine Entriegelungsstellung hinein. Die Betriebssicherheit der hier vorgestellten Kupplungseinrichtung 2 wird mit Hilfe der Rasteinrichtung 27 erhöht.

Die Rasteinrichtung 27 kann zumindest eine Raste 28 sowie zumindest eine dazu komplementäre Gegenraste 29 aufweisen. In den hier gezeigten Beispielen der Fig. 8 bis 13 umfasst die Rasteinrichtung 27 jeweils genau eine Raste 28 und jeweils genau eine Gegenraste 29. Es ist jedoch klar, dass bei anderen Ausführungsformen auch zwei oder mehr Rasten 28 und/oder zwei oder mehr Gegenrasten 29 vorhanden sein können.

Die jeweilige Raste 28 ist am Sicherungsring 9 ausgebildet, während die jeweilige Gegenraste 29 an einem der Anschlusskörper 5, 6 ausgebildet ist. Zweckmäßig ist die Gegenraste 29 am zweiten Anschlusskörper 6 ausgebildet. Auf diese Weise ist eine definierte Relativlage zwischen Gegenraste 29 und Sicherungsring 9 unabhängig von der Drehlage des ersten Anschlusskörpers 5 gegeben. Des Weiteren kann bei der Anordnung der Gegenraste 29 am zweiten Anschlusskörper 6 der Sicherungsring 9 unabhängig davon, ob der erste Anschlusskörper 5 vorhanden ist oder nicht, in der Verriegelungsstellung verrastet werden.

Die Rasteinrichtung 27 arbeitet zum Verrasten des Sicherungsrings 9 in der Verriegelungsstellung dabei in üblicher Weise. Wird der Sicherungsring 9 ausgehend von seiner Entriegelungsstellung in Richtung Verriegelungsstellung verdreht, überfährt die Raste 28 die Gegenraste 29 und bewirkt bei Erreichen der Verriegelungsstellung die gewünschte Verrastung, die mit einer formschlüssigen Drehsicherung in der entgegen gesetzten Drehrichtung einhergeht.

Bei der in den Fig. 8 bis 10 gezeigten Ausführungsform ist die Raste 28 am Betätigungselement 21 des Sicherungsrings 9 ausgebildet. Komplementär dazu ist die Gegenraste 29 in diesem Fall im Bereich des Durchbruchs 20 ausgebildet, der am Kragen 18 ausgespart ist und durch den das Betätigungselement 21 radial hindurchragt. Die Gegenraste 29 ist dabei an einer Einfassung 30 des Durchbruchs 20 ausgeformt bzw. am Kragen 18 ausgeformt.

Die Raste 28 ist zum Lösen der Verrastung relativ zur Gegenraste 29 quer zur Drehrichtung des Sicherungsrings 9, also quer zur Umfangsrichtung federelastisch beweglich angeordnet. Im Beispiel der Fig. 8 bis 10 ist die Raste 28 an einer Federzunge 31 angeordnet, die axial federelastisch beweglich ist. Die Federzunge 31 ist dabei mittels einer Freischnittkontur 32 aus dem Betätigungselement 21 frei geschnitten. Die Freischnittkontur 32 ist im Beispiel V-förmig ausgestaltet. Im Beispiel weist die Federzunge 31 an ihrem freien Ende einen axial abstehenden Pin oder Zapfen 33 auf, der ein manuelles Auslenken der Federzunge 31 zum Lösen der Verrastung vereinfacht. Die Raste 28 ist distal zum freien Ende der Federzunge 31 positioniert, wodurch sie vergleichsweise lagestabil angeordnet ist.

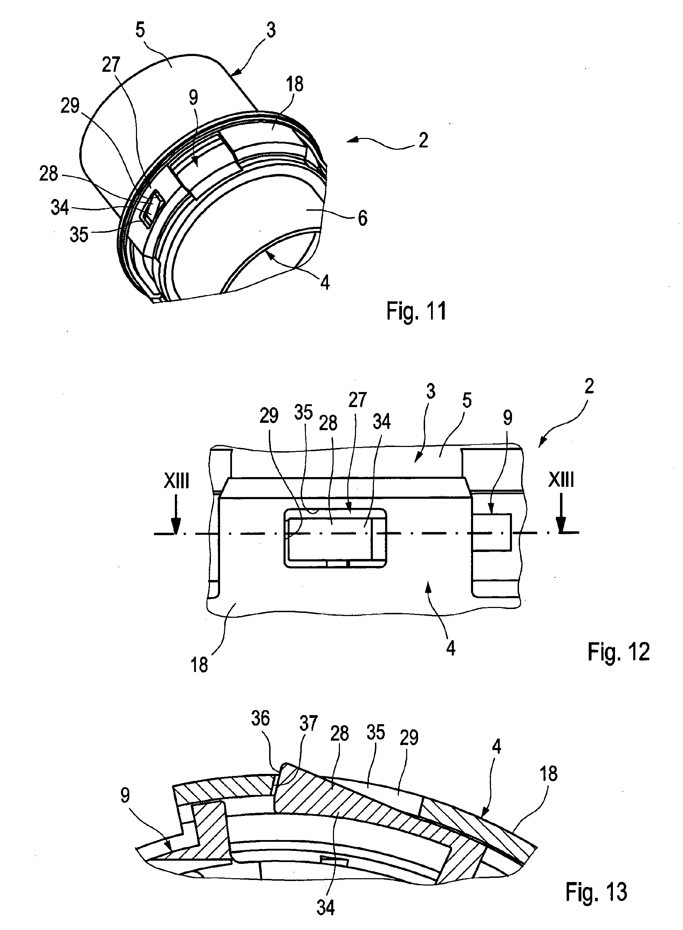

Bei der in den Fig. 11 bis 13 gezeigten, erfindungsgemäßen Ausführungsform ist die Raste 28 mit einem Rastarm 34 ausgestattet, der am Sicherungsring 9 in radialer Richtung federelastisch angeordnet ist. Die dazu komplementäre Gegenraste 29 umfasst dabei eine Rastöffnung 35, die in dem Kragen 18 ausgebildet ist, der den Sicherungsring 9 einfasst. Bei Erreichen der Verriegelungsstellung greift der Rastarm 34 in die Rastöffnung 35 radial ein. Zur Drehsicherung stützt sich der Rastarm 34 mit seinem freien Ende 36 an einem Rand 37 der Rastöffnung 35 in der Umfangsrichtung ab. Der radial federelastische Rastarm 34 kann besonders einfach radial eingedrückt, also nach innen aus der Rastöffnung 35 herausbewegt werden, um die Verrastung wieder zu lösen.

An Stelle einer quer zur Drehrichtung des Sicherungsrings 9 beweglichen Raste 28 kann zum Lösen der Verrastung auch eine quer zur Drehrichtung des Sicherungsrings 9 bewegliche Gegenraste 29 vorgesehen sein.

## Patentansprüche

1. Kupplungseinrichtung zum kommunizierenden Verbinden von zwei fluidführenden Komponenten (3, 4), insbesondere bei einer Frischluftanlage (1),
- mit einem ersten zylindrischen Anschlusskörper (5), der mehrere, in Umfangsrichtung beabstandet angeordnete, radial nach außen vorstehende Rastelemente (7) aufweist,
- mit einem zweiten zylindrischen Anschlusskörper (6), an dem ein Sicherungsring (9) zwischen einer Verriegelungsstellung und einer Entriegelungsstellung verdrehbar gelagert ist,
- wobei der Sicherungsring (9) Rastkonturen (10) aufweist, die komplementär zu den Rastelementen (7) angeordnet sind und die in der Verriegelungsstellung des Sicherungsrings (9) mit den Rastelementen (7) formschlüssig in Eingriff stehen,
- wobei der Sicherungsring (9) in der Umfangsrichtung zwischen den Rastkonturein (10) Durchgänge (11) aufweist, die komplementär zu den Rastelementen (7) angeordnet sind und durch welche die Rastelemente (7) in der Entriegelungsstellung des Sicherungsrings (9) axial durchführbar sind,
- wobei eine Rasteinrichtung (27) zur Drehsicherung des Sicherungsrings (9) in der Verriegelungsstellung vorgesehen ist,
- wobei die Rasteinrichtung (27) zumindest eine am Sicherungsring (9) ausgebildete Raste (28) und zumindest eine am ersten Anschlusskörper (5) oder am zweiten Anschlusskörper (6) ausgebildete Gegenraste (29) aufweist, mit welcher die Raste (28) bei Erreichen der Verriegelungsstellung verrastet und eine formschlüssige Drehsicherung bildet,
**dadurch gekennzeichnet,**
- **dass** die Raste (28) einen am Sicherungsring (9) radial federelastisch angeordneten Rastarm (34) aufweist,
- **dass** die Gegenraste (29) eine Rastöffnung (35) aufweist, die in einem den Sicherungsring (9) einfassenden Kragen (18) ausgebildet ist und in welche der Rastarm (34) bei Erreichen der Verriegelungsstellung radial eingreift und sich zur Drehsicherung in Umfangsrichtung an einem Rand (37) der Rastöffnung (35) abstützt.

2. Kupplungseinrichtung nach Anspruch 1,
**dadurch gekennzeichnet,**
- **dass** die Raste (28) zum Lösen der Verrastung relativ zur Gegenraste (29) quer zur Drehrichtung federelastisch beweglich ausgestaltet und/oder angeordnet ist.

3. Kupplungseinrichtung nach Anspruch 1 oder 2,
**dadurch gekennzeichnet,**
- **dass** die Gegenraste (29) zum Lösen der Verrastung relativ zur Raste (28) quer zur Drehrichtung federelastisch beweglich ausgestaltet und/oder angeordnet ist.

4. Kupplungseinrichtung nach einem der Ansprüche 1 bis 3,
**dadurch gekennzeichnet,**
- **dass** die Anschlusskörper (5, 6) in der Verriegelungsstellung des Sicherungsrings (9) ausschließlich durch Kraftschluss, insbesondere durch Reibschluss, relativ zueinander gegen Verdrehen gesichert sind.

5. Kupplungseinrichtung nach einem der Ansprüche 1 bis 4
**dadurch gekennzeichnet,**
- **dass** eine gegen Verdrehen sichernde Kraft zumindest zu einem wesentlichen Anteil durch Verpressen einer zwischen den Anschlusskörpern (5, 6) wirkenden Dichtung (12) erzeugt wird.

6. Kupplungseinrichtung nach einem der Ansprüche 1 bis 5,
**dadurch gekennzeichnet,**
- **dass** die Anschlusskörper (5, 6) im montierten Zustand durch Formschluss gegen Verdrehen gesichert sind, wobei insbesondere eine Axialführung zur Realisierung einer Verdrehsicherung vorgesehen sein kann.

7. Kupplungseinrichtung nach einem der Ansprüche 1 bis 6,
**dadurch gekennzeichnet,**
- **dass** der Sicherungsring (9) soweit formelastisch ausgestaltet ist, dass der erste Anschlusskörper (5) mit auf die Rastkonturen (10) ausgerichteten Rastelementen (7) axial steckbar und mit den Rastelementen (7) an den Rastkonturen (10) verrastbar ist, wenn sich der Sicherungsring (9) in seiner Verriegelungsstellung befindet, oder
- **dass** der Sicherungsring (9) soweit formstabil ausgestaltet ist, dass der erste Anschlusskörper (5) nur dann axial steckbar ist, wenn sich der Sicherungsring (9) in seiner Entriegelungsstellung befindet und die Rastelemente (7) auf die Durchgänge (11) ausgerichtet sind.

8. Kupplungseinrichtung nach einem der Ansprüche 1 bis 7,
**dadurch gekennzeichnet,**
- **dass** der Sicherungsring (9) an den Rastkonturen (10) in der Umfangsrichtung orientierte Einführschrägen (13) aufweist, die beim Verdrehen des Sicherungsrings in die Verriegelungsstellung die Rastelemente (7) axial in der Einsteckrichtung (14) antreiben.

9. Kupplungseinrichtung nach einem der Ansprüche 1 bis 8,
**dadurch gekennzeichnet,**
- **dass** der erste Anschlusskörper (5) an den Rastelementen (7) in der Umfangsrichtung orientierte Einführschrägen (15) aufweist, die beim Verdrehen des Sicherungsrings (9) in die Verriegelungsstellung die Rastelemente (7) axial in der Einsteckrichtung (14) antreiben.

10. Kupplungseinrichtung nach einem der Ansprüche 1 bis 9,
**dadurch gekennzeichnet,**
- **dass** die Anschlusskörper (5, 6) mit gleichen durchströmbaren Querschnitten bündig axial aneinander stoßen.

11. Kupplungseinrichtung nach einem der Ansprüche 1 bis 10,
**dadurch gekennzeichnet,**
- **dass** eine Dichtung (12) vorgesehen ist, die den ersten Anschlusskörper (5) gegenüber dem zweiten Anschlusskörper (6) dichtet, und die insbesondere axial und/oder radial wirkend angeordnet sein kann.

12. Kupplungseinrichtung nach einem der Ansprüche 1 bis 11,
**dadurch gekennzeichnet,**
- **dass** zumindest einer der Anschlusskörper (5, 6) integral an der zugehörigen Komponente (3, 4) an- oder ausgeformt ist.

13. Kupplungseinrichtung nach einem der Ansprüche 1 bis 12,
**dadurch gekennzeichnet,**
- **dass** es sich bei den Komponenten (3, 4) der Frischluftanlage (1) um Mitglieder der folgenden Gruppe handelt: Luftfiltergehäuse, Frischluftverteilergehäuse, Kompressorgehäuse, Verdichtergehäuse, Saugmodulgehäuse, Leitungsabschnitt, Rohr, Schlauch.

14. Kupplungseinrichtung nach einem der Ansprüche 1 bis 13, **gekennzeichnet durch** wenigstens eines der folgenden Merkmale:
- der zweite Anschlusskörper (6) weist eine Ringstufe (16) auf, an welcher der erste Anschlusskörper (5) axial stirnseitig anliegt,
- der zweite Anschlusskörper (6) weist einen die Ringstufe (16) einfassenden, axial abstehenden Kragen (18) auf, in dem der Sicherungsring (9) drehbar angeordnet ist,
- der Kragen (18) weist radial nach innen vorstehende Halteelemente (19) auf, die den Sicherungsring (9) zumindest in dessen Verriegelungsstellung formschlüssig übergreifen,
- der Kragen (18) weist zumindest einen radialen Durchbruch (20) auf, **durch** den ein Betätigungselement (21) des Sicherungsrings (9) hindurchragt und der ein Verstellen des Betätigungselements (21) innerhalb des Durchbruchs (20) zum Verdrehen des Sicherungsrings (9) zwischen der Entriegelungsstellung und der Verriegelungsstellung ermöglicht,
- der in den zweiten Anschlusskörper (6) eingesetzte Sicherungsring (9) ist am zweiten Anschlusskörper (6) verliersicher angeordnet.

15. Frischluftanlage für eine Brennkraftmaschine, insbesondere eines Kraftfahrzeugs, mit zwei Komponenten (3, 4), die mit einer Kupplungseinrichtung (2) nach einem der Ansprüche 1 bis 14 kommunizierend verbunden sind.

## Claims

1. A coupling device for the communicating connection of two fluid-conveying components (3, 4), in particular of a fresh air system (1),
- with a first cylindrical connecting body (5) which has a plurality of radially outwardly protruding detent elements (7) arranged spaced apart in the circumferential direction,
- with a second cylindrical connecting body (6) on which a retaining ring (9) is rotatably mounted between a locking position and an unlocking position,
- wherein the retaining ring (9) has detent contours (10) which are arranged complementary to the detent elements (7) and which are positively engaged with the detent elements (7) in the locking position of the retaining ring (9),
- wherein the retaining (9) has passages (11) which are located in the circumferential direction between the detent contours (10) and are arranged complementary to the detent elements (7) and through which the detent elements (7) can be axially fed in the unlocking position of the retaining ring (9),
- wherein a detent device (27) is provided for rotatably securing the retaining ring (9) in the locking position,
- wherein the detent device (27) has at least one detent (28) which is formed on the retaining ring (9) and at least one counter detent (29) which is formed on the first connecting body (5) or on the second connecting body (6) and with which the detent (28) interlocks upon reaching the locking position and forms a positive rotation prevention,
**characterized in**
- **that** the detent (28) has a detent arm (34) which is arranged on the retaining ring (9) to be spring- elastic in the radial direction,
- **that** the counter detent (29) has a detent opening (35) which is formed in a collar (18) enclosing the retaining ring (9) and in which the detent arm (34) radially engages upon reaching the locking position so as to be supported on an edge (37) of the detent opening (35) in order to be rotatably secured in the circumferential direction.

2. The coupling device according to claim 1, **characterized in**
- **that** for releasing the interlock, the detent (28) is configured and/or arranged to be spring-elastically movable relative to the counter detent (29) and transverse to the rotational direction.

3. The coupling device according to claim 1 or claim 2, **characterized in**
- **that** for releasing the interlock, the counter detent (29) is configured and/or arranged to be spring-elastically movable relative to the detent (28) and transverse to the rotational direction.

4. The coupling device according to any one of the claims 1 to 3, **characterized in**
- **that** in the locking position of the retaining ring (9), the connecting bodies (5, 6) are secured against rotation relative to each other exclusively through nonpositive locking, in particular through frictional locking.

5. The coupling device according to any one of the claims 1 to 4, **characterized in**
- **that** a force securing against rotation is generated at least to a substantial proportion by compressing a seal (12) acting between the connecting bodies (5, 6).

6. The coupling device according to any one of the claims 1 to 5, **characterized in**
- **that** in the assembled state, the connecting bodies (5, 6) are secured against rotation through positive locking, wherein in particular an axial guide can be provided for implementing a rotation prevention.

7. The coupling device according to any one of the claims 1 to 6, **characterized in**
- **that** the retaining ring (9) is configured to be dimensionally elastic to such an extent that the first connecting body (5) with the detent elements (7) being aligned with the detent contours (10) can be axially inserted and can be interlocked through the detent elements (7) with the detent contours 10 when the retaining ring (9) is in its locking position, or
- **that** the retaining ring (9) is configured to be dimensionally stable to such an extent that the first connecting body (5) can be axially inserted only if the retaining ring (9) is in its unlocking position and the detent elements (7) are aligned with the passages (11).

8. The coupling device according to anyone of the claims 1 to 7, **characterized in**
- **that** on the detent contours (10), the retaining ring (9) has lead-in chamfers (13) which are oriented in the circumferential direction and which, during the rotation of the retaining ring into the locking position, axially drive the detent elements (7) in the insertion direction (14) .

9. The coupling device according to anyone of the claims 1 to 8, **characterized in**
- **that** on the detent elements (7), the first connecting body (5) has lead-in chamfers (15) which are oriented in the circumferential direction and which, during the rotation of the retaining ring (9) into the locking position, axially drive the detent elements (7) in the insertion direction (14).

10. The coupling device according to anyone of the claims 1 to 9, **characterized in**
- **that** the connecting bodies (5, 6) abut axially and flush against each other with equal flow cross-sections.

11. The coupling device according to anyone of the claims 1 to 10, **characterized in**
- **that** a seal (12) is provided which seals the first connecting body (5) with respect to the second connecting body (6) and which can in particular be arranged to act axially and/or radially.

12. The coupling device according to anyone of the claims 1 to 11, **characterized in**
- **that** at least one of the connecting bodies (5, 6) is integrally molded or formed on the associated component (3, 4).

13. The coupling device according to anyone of the claims 1 to 12, **characterized in**
- **that** the components (3, 4) of the fresh air system (1) involve members of the following group: air filter housing, fresh air distributor housing, compressor housing, supercharger housing, intake module housing, line section, pipe, hose.

14. The coupling device according to any one of the claim 1 to 13, **characterized by** at least one of the following features:
- the second connecting body (6) has an annular step (16) against which the connecting body (5) rests axially with its front side,
- the second connecting body (6) has an axially protruding collar (18) which encloses the annular step (16) and in which the retaining ring (9) is rotatably arranged,
- the collar (18) has holding elements (19) which protrude radially inward and which positively engage over the retaining ring (9), at least in the locking position of the latter,
- the collar (18) has at least one radial aperture (20) through which an actuating element (21) of the retaining ring (9) protrudes and which enables a displacement of the actuating element (21) within the aperture (20) for rotating the retaining ring (9) between the unlocking position and the locking position,
- the retaining ring (9) inserted in the second connecting body (6) is captively arranged in the second connecting body (6).

15. A fresh air system for an internal combustion engine, in particular of a motor vehicle, comprising two components (3, 4) which are in a communicating connection with a coupling device (2) according to any one of the claims 1 to 14.

## Revendications

1. Dispositif d'accouplement pour relier en communication deux composants (3, 4) véhiculant du fluide, en particulier dans une installation à air frais (1), comprenant
- un premier corps cylindrique de raccordement (5) qui présente une pluralité d'éléments d'arrêt (7) disposés à distance les uns des autres dans la direction circonférentielle et faisant saillie radialement vers l'extérieur,
- un deuxième corps cylindrique de raccordement (6) sur lequel un circlip (9) est logé à rotation entre une position de verrouillage et une position de déverrouillage,
- ledit circlip (9) présentant des contours d'arrêt (10) qui sont disposés de façon complémentaire aux éléments d'arrêt (7) et qui, dans la position de verrouillage du circlip (9), se trouvent en prise à engagement positif avec lesdits éléments d'arrêt (7),
- ledit circlip (9) présentant, dans la direction circonférentielle entre les contours d'arrêt (10), des passages (11) qui sont disposés de façon complémentaire aux éléments d'arrêt (7) et qui, dans la position de déverrouillage du circlip (9), peuvent être traversés axialement par les éléments d'arrêt (7),
- un dispositif d'arrêt (27) étant prévu pour sécuriser le circlip (9) contre une rotation dans la position de verrouillage,
- ledit dispositif d'arrêt (27) présentant au moins un cran d'arrêt (29) réalisé sur le circlip (9) et au moins un contre-cran d'arrêt (29) qui est réalisé sur ledit premier corps de raccordement (5) ou sur ledit deuxième corps de raccordement (6) et avec lequel ledit cran d'arrêt (28) s'enclenche lorsque la position de verrouillage est atteinte et forme un dispositif anti-rotation à engagement positif,
**caractérisé par le fait**
- **que** ledit cran d'arrêt (28) présente un bras d'arrêt (34) disposé sur le circlip (9) de manière à être radialement élastique,
- **que** ledit contre-cran d'arrêt (29) présente une ouverture d'arrêt (35) qui est ménagée dans une collerette (18) entourant le circlip (9) et dans laquelle ledit bras d'arrêt (34) s'engage radialement lorsque la position de verrouillage est atteinte et s'appuie dans la direction circonférentielle sur un bord (37) de ladite ouverture d'arrêt (35) pour une immobilisation en rotation.

2. Dispositif d'accouplement selon la revendication 1,
**caractérisé par le fait**
- **que**, pour dégager l'enclenchement par rapport au contre-cran d'arrêt (29), le cran d'arrêt (28) est configuré et/ou disposé de manière à être déplaçable élastiquement transversalement au sens de rotation.

3. Dispositif d'accouplement selon la revendication 1 ou 2,
**caractérisé par le fait**
- **que**, pour dégager l'enclenchement par rapport au cran d'arrêt (28), le contre-cran d'arrêt (29) est configuré et/ou disposé de manière à être déplaçable élastiquement transversalement au sens de rotation.

4. Dispositif d'accouplement selon l'une quelconque des revendications 1 à 3,
**caractérisé par le fait**
- **que**, dans la position de verrouillage du circlip (9), les corps de raccordement (5, 6) sont sécurisés l'un par rapport à l'autre contre une rotation exclusivement par adhérence, en particulier par friction.

5. Dispositif d'accouplement selon l'une quelconque des revendications 1 à 4,
**caractérisé par le fait**
- **qu'**une force sécurisant contre une rotation est générée au moins pour une partie essentielle par pressage d'un joint d'étanchéité (12) agissant entre lesdits corps de raccordement (5, 6).

6. Dispositif d'accouplement selon l'une quelconque des revendications 1 à 5,
**caractérisé par le fait**
- **que**, en état monté, lesdits corps de raccordement (5, 6) sont sécurisés par engagement positif contre une rotation, en particulier un guidage axial pouvant être prévu pour réaliser un dispositif anti-rotation.

7. Dispositif d'accouplement selon l'une quelconque des revendications 1 à 6,
**caractérisé par le fait**
- **que** ledit circlip (9) est conçu avec une élasticité de forme telle que le premier corps de raccordement (5) puisse être rapporté axialement avec les éléments d'arrêt (7) alignés sur les contours d'arrêt (10) et puisse être enclenché avec les éléments d'arrêt (7) sur les contours d'arrêt (10) lorsque le circlip (9) se trouve dans sa position de verrouillage, ou
- **que** le circlip (9) est conçu avec une stabilité de forme telle que le premier corps de raccordement (5) ne puisse être rapporté axialement que lorsque le circlip (9) se trouve dans sa position de déverrouillage et que les éléments d'arrêt (7) sont alignés sur les passages (11).

8. Dispositif d'accouplement selon l'une quelconque des revendications 1 à 7,
**caractérisé par le fait**
- **que** ledit circlip (9) présente, sur les contours d'arrêt (10), des biseaux d'introduction (13) orientés dans la direction circonférentielle qui, lors de la rotation du circlip dans la position de verrouillage, entraînent les éléments d'arrêt (7) axialement dans la direction d'insertion (14).

9. Dispositif d'accouplement selon l'une quelconque des revendications 1 à 8,
**caractérisé par le fait**
- **que** le premier corps de raccordement (5) présente, sur les éléments d'arrêt (7), des biseaux d'introduction (15) orientés dans la direction circonférentielle qui, lors de la rotation du circlip (9) dans la position de verrouillage, entraînent les éléments d'arrêt (7) axialement dans la direction d'insertion (14).

10. Dispositif d'accouplement selon l'une quelconque des revendications 1 à 9,
**caractérisé par le fait que** les corps de raccordement (5, 6) sont contigus l'un à l'autre axialement à fleur, avec des sections transversales identiques aptes à être traversées.

11. Dispositif d'accouplement selon l'une quelconque des revendications 1 à 10,
**caractérisé par le fait**
- **que** l'on prévoit un joint d'étanchéité (12) qui rend étanche ledit premier corps de raccordement (5) par rapport au deuxième corps de raccordement (6) et qui, en particulier, peut être disposé de manière à agir axialement et/ou radialement.

12. Dispositif d'accouplement selon l'une quelconque des revendications 1 à 11,
**caractérisé par le fait**
- **que** l'un au moins des corps de raccordement (5, 6) est formé intégralement sur le composant (3, 4) associé, soit sur celui-ci soit dans celui-ci.

13. Dispositif d'accouplement selon l'une quelconque des revendications 1 à 12,
**caractérisé par le fait**
- **que**, dans le cas des composants (3, 4) de l'installation à air frais (1), il s'agit d'éléments du groupe suivant : corps de filtre à air, boîtier de distributeur d'air frais, carter de compression, carter de compresseur, carter de module d'aspiration, tronçon de conduite, tuyau, tuyau flexible.

14. Dispositif d'accouplement selon l'une quelconque des revendications 1 à 13,
**caractérisé par** au moins l'une des caractéristiques suivantes :
- ledit deuxième corps de raccordement (6) présente un gradin annulaire (16) contre lequel ledit premier corps de raccordement (5) s'applique axialement sur la face frontale,
- ledit deuxième corps de raccordement (6) présente une collerette (18) faisant saillie axialement qui entoure ledit gradin annulaire (16) et dans laquelle ledit circlip (9) est disposé à rotation,
- ladite collerette (18) présente des éléments de maintien (19) qui font saillie radialement vers l'intérieur et qui s'engagent à engagement positif sur ledit circlip (9), au moins dans la position de verrouillage de celui-ci,
- ladite collerette (18) présente au moins une percée (20) radiale à travers laquelle passe un élément de manoeuvre (21) du circlip (9) et qui permet un réglage de l'élément de manoeuvre (21) à l'intérieur de la percée (20) pour tourner le circlip (9) entre la position de déverrouillage et la position de verrouillage,
- le circlip (9) inséré dans le deuxième corps de raccordement (6) est disposé de manière imperdable sur le deuxième corps de raccordement (6).

15. Installation à air frais pour un moteur à combustion interne, en particulier d'un véhicule automobile, comprenant deux composants (3, 4) qui sont reliés entre eux en communication par un dispositif d'accouplement (2) selon l'une quelconque des revendications 1 à 14.
